# EUROPEAN PATENT APPLICATION

(11) **EP 4 333 442 A1**
(43) Date of publication of application: **06.03.2024**
(21) Application number: 22876996.4
(22) Date of filing: 23.05.2022
(51) Int. Cl.: H04N 21/4425, H04N 17/00, H04N 17/04, H04N 21/485, H04N 21/436

(54) **ELECTRONIC APPARATUS AND CONTROLLING METHOD THEREOF**

(30) Priority: 30.09.2021 KR 20210130117
(71) Applicant: Samsung Electronics Co., Ltd., Suwon-si, Gyeonggi-do 16677 (KR)
(72) Inventor: WON, Kangyoung, Suwon-si Gyeonggi-do 16677 (KR); JANG, Youngki, Suwon-si Gyeonggi-do 16677 (KR)
(74) Representative: Appleyard Lees IP LLP
(86) International application number: PCT/KR2022/095104
(87) International publication number: WO 2023/055225

(57) **Abstract**

An electronic apparatus is disclosed. The electronic apparatus includes an electronic apparatus includes: a communication interface; a memory storing at least one instruction; and a processor configured to execute the at least one instruction to: receive, from an external device through the communication interface, state information of the external device, execute a self-diagnosis mode to obtain error information of at least one of the electronic apparatus or the external device based on state information of the electronic apparatus and the state information of the external device, obtain setting information corresponding to at least one of the electronic apparatus or the external device based on the obtained error information, and control at least one of the electronic apparatus or the external device based on the obtained setting information.

## Description

### [Technical Field]

The disclosure relates to an electronic apparatus for providing content and a controlling method thereof and, more specifically, to an electronic apparatus for providing content to a user in conjunction with at least one external device, and a controlling method thereof

### [Background Art]

Various electronic apparatuses that provide content in conjunction with a recent external device has been distributed. An error in software or hardware associated with an electronic apparatus or an external device may occur while the electronic apparatus provides content to a user in conjunction with an external device. A conventional electronic apparatus may have a function to detect an error associated with an electronic apparatus and remove errors detected in various manners, but may not have a function to detect an error associated with an external device, and remove the error, so that there is a problem in that smooth content provision is not easy.

There has been a continuing need for a method of detecting an error associated with an external device, and performing a function of removing the detected error, thereby smoothly operating the electronic apparatus providing the content to the user.

### [Disclosure]

### [Technical Problem]

The disclosure provides an electronic apparatus and a control method to flexibly detect errors occurring in both electronic apparatuses and external devices, to correct the setting values of electronic apparatuses or external devices, and to remove detected errors by providing guide information corresponding to user actions.

### [Technical Solution]

According to an aspect of the disclosure, an electronic apparatus includes: a communication interface; a memory storing at least one instruction; and a processor configured to execute the at least one instruction to: receive, from an external device through the communication interface, state information of the external device, execute a self-diagnosis mode to obtain error information of at least one of the electronic apparatus or the external device based on state information of the electronic apparatus and the state information of the external device, obtain setting information corresponding to at least one of the electronic apparatus or the external device based on the obtained error information, and control at least one of the electronic apparatus or the external device based on the obtained setting information.

The electronic apparatus further includes: a display, wherein the processor may be further configured to execute the at least one instruction to control the display to display guide information to solve an error occurring in at least one of the electronic apparatus or the external device based on the obtained error information.

The processor may be further configured to execute the at least one instruction to: based on identifying that an error has occurred in the electronic apparatus based on the obtained error information, identify whether correction of a setting value of the electronic apparatus is necessary based on the error information, and based on identifying that correction of a setting value of the electronic apparatus is necessary, correct a setting value of the electronic apparatus based on the setting information.

The processor may be further configured to execute the at least one instruction to: based on identifying that an error has occurred in the electronic apparatus based on the obtained error information, identify whether a user action is necessary for the electronic apparatus based on the error information, and based on identifying that a user action for the electronic apparatus is necessary, provide guide information corresponding to the user action.

The processor may be further configured to execute the at least one instruction to: based on identifying that an error has occurred in the external device based on the obtained error information, identify whether correction of a setting value of the external device is necessary based on the error information, and based on identifying that correction of a setting value of the external device is necessary, transmit a control signal to correct a setting value of the external device to the external device through the communication interface based on the setting information.

The processor may be further configured to execute the at least one instruction to: based on identifying that an error has occurred in the external device based on the obtained error information, identify whether a user action for the external device is necessary based on the error information, and based on identifying that a user action for the external device is necessary, provide guide information corresponding to the user action.

The processor may be further configured to execute the at least one instruction to: correct a setting value of at least one of the electronic apparatus or the external device based on the obtained setting information, and based on identifying that an error is not removed after correcting the setting value, provide guide information to solve the error.

The error information may include at least one of communication connection error information, operation error information of the electronic apparatus, or operation error information of the external device, wherein the communication connection error information error information, wherein the operation error information of the electronic apparatus includes at least one of the output state effort information, heat dissipation state error information, or power supply error information of the electronic apparatus, and wherein the operation error information of the external device includes at least one of the output state error information, heat dissipation state error information, or power supply error information of the external device.

The state information of the electronic apparatus may include at least one of the temperature information, maximum voltage or maximum current information, or timing information of the input signal of the electronic apparatus, wherein the state information of the external device includes at least one of the temperature information, maximum voltage or maximum current information, or timing information of the output signal of the external device.

The processor may be further configured to execute the at least one instruction to obtain the error information by inputting state information of the electronic apparatus and state information of the external device to an artificial intelligence model, and wherein the artificial intelligence model is a model trained to output error information of the apparatus based on the state information of the apparatus.

According to an aspect of the disclosure, a method of controlling an electronic apparatus includes: receiving, from an external device, state information of the external device; executing a self-diagnosis mode to obtain error information of at least one of the electronic apparatus and the external device based on state information of the electronic apparatus and the state information of the external device; obtaining setting information corresponding to at least one of the electronic apparatus or the external device based on the obtained error information; and controlling at least one of the electronic apparatus or the external device based on the obtained setting information.

The method may further include displaying guide information to solve an error occurring in at least one of the electronic apparatus or the external device based on the obtained error information.

The obtaining of the setting information may include, based on identifying that an error has occurred in the electronic apparatus based on the obtained error information, identifying whether correction of a setting value of the electronic apparatus is necessary based on the error information, and the controlling may include, based on identifying that correction of a setting value of the electronic apparatus is necessary, correcting a setting value of the electronic apparatus based on the setting information.

The obtaining of the setting information may include, based on identifying that an error has occurred in the electronic apparatus based on the obtained error information, identifying whether a user action is necessary for the electronic apparatus based on the error information, and the controlling may include, based on identifying that a user action for the electronic apparatus is necessary, providing guide information corresponding to the user action.

The obtaining of the setting information may include, based on identifying that an error has occurred in the external device based on the obtained error information, identifying whether correction of a setting value of the external device is necessary based on the error information, and the controlling may include, based on identifying that correction of a setting value of the external device is necessary, transmitting a control signal to correct a setting value of the external device to the external device through the communication interface based on the setting information.

### [Effect of Invention]

According to various embodiments as described herein, because the electronic apparatus may perform a function for removing an error occurring in at least one of the two devices by detecting an error occurring in an external device as well as an error occurring in the electronic apparatus, the convenience of a user receiving content from an electronic apparatus may be improved.

### [Description of Drawings]

FIGS. 1A and 1B are diagrams schematically illustrating an operation of an electronic apparatus, according to an embodiment of the disclosure;
FIG. 2 is a block diagram illustrating a configuration of an electronic apparatus, according to an embodiment of the disclosure;
FIG. 3 is a flowchart illustrating an operation of an electronic apparatus and an external device, according to an embodiment of the disclosure;
FIGS. 4A and 4B are diagrams illustrating an operation of removing an error occurring in an electronic apparatus, according to an embodiment of the disclosure;
FIGS. 5A and 5B are diagrams illustrating an operation of removing an error occurring outside an electronic apparatus, according to an embodiment of the disclosure;
FIG. 6 is a diagram illustrating various information obtained to remove an error, according to an embodiment of the disclosure;
FIG. 7 is a diagram illustrating an artificial intelligence model, according to an embodiment of the disclosure;
FIG. 8 is a block diagram illustrating a functional configuration of an electronic apparatus, according to an embodiment of the disclosure;
FIG. 9 is a block diagram illustrating a configuration of an external device, according to an embodiment of the disclosure; and
FIG. 10 is a flowchart illustrating a method of controlling according to an embodiment of the disclosure.

### [Detailed Description of Exemplary Embodiments]

The disclosure will be described in greater detail with reference to the attached drawings.

The terms used in the disclosure and the claims are general terms identified in consideration of the functions of embodiments of the disclosure. However, these terms may vary depending on intention, legal or technical interpretation, emergence of new technologies, and the like of those skilled in the related art. In addition, in some cases, a term may be selected by the applicant, in which case the term will be described in detail in the description of the corresponding disclosure. Thus, the term used in this disclosure should be defined based on the meaning of term, not a simple name of the term, and the contents throughout this disclosure.

Expressions such as "have," "may have," "include," "may include" or the like represent presence of corresponding numbers, functions, operations, or parts, and do not exclude the presence of additional features.

Expressions such as "at least one of A or B" and "at least one of A and B" should be understood to represent "A," "B" or "A and B."

As used herein, terms such as "first," and "second," may identify corresponding components, regardless of order and/or importance, and are used to distinguish a component from another without limiting the components.

In addition, a description that one element (e.g., a first element) is operatively or communicatively coupled with/to" or "connected to" another element (e.g., a second element) should be interpreted to include both the first element being directly coupled to the second element, and the first element being indirectly coupled to the second element through an intervening third element.

A singular expression includes a plural expression, unless otherwise specified. It is to be understood that terms such as "comprise" or "consist of" are used herein to designate a presence of a characteristic, number, step, operation, element, component, or a combination thereof, and not to preclude a presence or a possibility of adding one or more of other characteristics, numbers, steps, operations, elements, components or a combination thereof.

A term such as "module," "unit," and "part," is used to refer to an element that performs at least one function or operation and that may be implemented as hardware or software, or a combination of hardware and software. Except when each of a plurality of "modules," "units," "parts," and the like must be realized in an individual hardware, the components may be integrated in at least one module or chip and be realized in at least one processor.

In the disclosure, a "user" may refer to a person receiving a service from an external device but is not limited thereto.

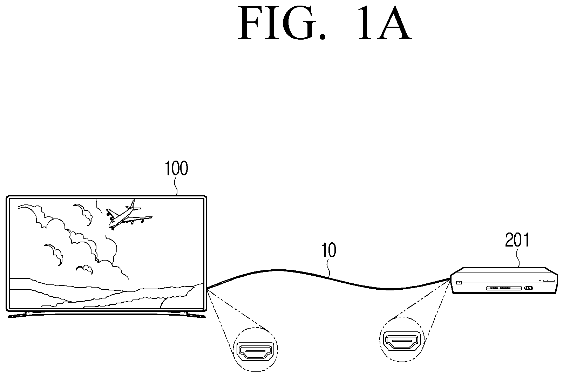

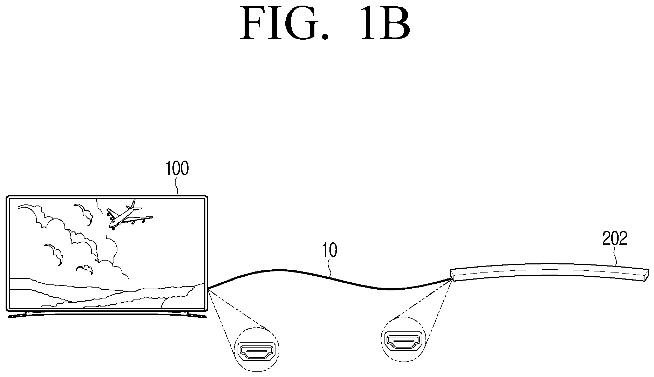

FIGS. 1A and 1B are diagrams schematically illustrating an operation of an electronic apparatus according to an embodiment of the disclosure. Referring to FIGS. 1A and 1B, the operation of the electronic apparatus 100 will be described based on an assumption that the external device 200 is implemented with at least one of two types of devices, an external device 201 which provides data to the electronic apparatus 100, and an external device 202 which receives data from the electronic apparatus 100.

Referring to FIG. 1A, an electronic apparatus 100 may be connected to an external device 201 through a wired interface 10 to provide content to a user. The electronic apparatus 100 may be implemented with various types of devices such as a set-top box, a digital TV, a DVD player, a Blu-ray disc player, a game machine, a network TV, a smart TV, an Internet TV, a Web TV, an Internet Protocol Television (IPTV), a signage, a PC, a Head Mounted Display (HMD), a wearable device, and the like, but is not limited thereto.

The external device 201 may be a device that transmits data related to content to the electronic apparatus 100. The external device 201 according to the depicted example may be implemented as a set-top box, but is not limited thereto. The external device 201 may transmit data related to the content to the electronic apparatus 100 through various types of wired interfaces 10, such as a High-Definition Multimedia Interface (HDMI), a Universal Serial Bus (USB), or a Thunderbolt. In this example, the electronic apparatus 100 and the external device 201 may have a port corresponding to a type of the wired interface 10 and communicate with each other through a corresponding port.

Referring to FIG. 1B, the electronic apparatus 100 may be connected to an external device 202 through a wired interface 10 to provide content to a user. An external device 202 according to an embodiment may be implemented as a sound bar capable of outputting an audio signal, but the external device 202 may receive data related to the content from the electronic apparatus 100 through the wired interface 10 and provide the content to the user based on the received data.

As described above, the electronic apparatus 100 may be connected to at least one external device of various types of external devices 201, 202, etc. to provide content to the user. However, that the electronic apparatus 100 and the external device 200 are connected to the wired interface 10 is merely exemplary, and the electronic apparatus 100 may be connected to the external device 200 through a wireless interface such as Bluetooth or Wi-Fi so as to provide content to the user.

Various types of errors may occur in at least one of the electronic apparatus 100 or the external device 200 while the electronic apparatus 100 is connected to the external device 200 and provides content. The various types of errors may include errors related to a heating state of the electronic apparatus 100 or the external device 200, an error related to a data input/output state of the electronic apparatus 100 or the external device 200, and an error related to a power supply of the electronic apparatus 100 or the external device 200, and also an error related to the communication interface and an error related to a network.

The electronic apparatus 100 may detect an error generated in at least one of the electronic apparatus 100 or the external device 200, correct at least one setting value of at least one of the electronic apparatus 100 or the external device 200 to remove the detected error, or provide guide information indicating a user action to remove an error.

Hereinafter, various embodiments of detecting an error that may occur in at least one of the electronic apparatus or an external device and removing an error detected through various methods will be described in greater detail.

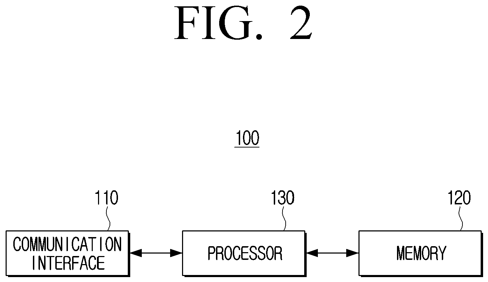

FIG. 2 is a block diagram illustrating a configuration of an electronic apparatus according to an embodiment of the disclosure.

Referring to FIG. 2, the electronic apparatus 100 may include a communication interface 110, a memory 120, and a processor 130.

The communication interface 110 may input and output various types of data. For example, the communication interface 110 may receive and transmit various types of data with the electronic apparatus 100 through communication methods such as an access point (AP)-based wireless fidelity (Wi-Fi) (wireless local area network (WLAN)), Bluetooth, Zigbee, wired/wireless local area network (LAN), wide area network (WAN), Ethernet, IEEE 1394, high definition multimedia interface (HDMI), universal serial bus (USB), mobile high-definition link (MHL), advanced encryption standard (AES)/European broadcasting union (EBU), optical, coaxial, or the like.

The memory 120 may store data required for various embodiments of the disclosure. The memory 120 may be implemented as a memory embedded within the electronic apparatus 100 or a memory detachable from the electronic apparatus 100 according to the usage of data storage. For example, the data for driving the electronic apparatus 100 may be stored in the memory embedded within the electronic apparatus 100, and the data for upscaling of the electronic apparatus 100 may be stored in the memory detachable from the electronic apparatus 100. A memory embedded in the electronic apparatus 100 may be implemented as at least one of a volatile memory such as a dynamic random access memory (DRAM), a static random access memory (SRAM), a synchronous dynamic random access memory (SDRAM), or a non-volatile memory (e.g., one time programmable ROM (OTPROM), programmable ROM (PROM), erasable and programmable ROM (EPROM), EEPROM, mask ROM, flash ROM, a flash memory (e.g., NAND flash or NOR flash), a hard disk drive (HDD), a solid state drive (SSD), or the like. A memory detachably mounted to the electronic apparatus 100 may be implemented as a memory card (e.g., a compact flash (CF), a secure digital (SD), micro secure digital (micro-SD), a mini secure digital (mini-SD), an extreme digital (xD), a multi-media card (MMC), etc.), an external memory (e.g., a universal serial bus (USB) memory, or the like) connectable to the USB port, or the like.

The processor 130 controls the overall operation of the electronic apparatus 100. The processor 130 may be connected to each configuration of the electronic apparatus 100 to control the operation of the electronic apparatus 100 in general. For example, the processor 130 may be connected to the communication interface 110 and the memory 120 to control the operation of the electronic apparatus 100.

According to an embodiment, the processor 130 may be referred to as various names such as a digital signal processor (DSP), a microprocessor, a central processing unit (CPU), a micro controller unit (MCU), a micro processing unit (MPU), a neural processing unit (NPU), a controller, and an application processor (AP), but will be referred to as the processor 130 herein.

The processor 130 may be implemented as a system on chip (SoC) type or a large scale integration (LSI) type having a processing algorithm built therein, an application specific integrated circuit (ASIC) type, or in a field programmable gate array (FPGA) type. The processor 130 may include volatile memory such as SRAM.

According to an embodiment, the processor 130 may execute at least one instruction stored in the memory 120 to obtain state information of the electronic apparatus 100. The processor 130 may receive status information of the external device from the external device 200 connected through the communication interface 110. The state information of the device may include, but is not limited to, temperature information of the device, maximum voltage and maximum current information of the device, data leading timing information of the device, and timing information of the input/output signal related to the communication connection.

The processor 130 may also execute a self-diagnosis mode for sensing an error in at least one of the electronic apparatus 100 or the external device 200 based on identifying that a predetermined period of time is nearing or a user command is input. The processor 130 may obtain error information of at least one of the electronic apparatus 100 or the external device 200 based on the state information of the electronic apparatus 100 and the state information of the external device based on an event in which the self-diagnosis mode is executed.

The error information of a device may include at least one of communication connection error information, the operation error information of the electronic apparatus 100, or the operation error information of the external device 200. The communication connection error information may include at least one of connection error information or network error information regarding the communication interface 110 of the electronic apparatus 100 and the communication interface of the external device 200. The operation error information of the electronic apparatus 100 may include at least one of information about an output state error of the electronic apparatus 100, information about a heating state error of the electronic apparatus 100, or information about a power supply error of the electronic apparatus 100. The operation error information of the external device 200 may include at least one of information about the output state error of the external device 200, information about the heating state error of the external device 200, or information about the power supply error of the external device 200,

The processor 130 may obtain setting information corresponding to at least one of the electronic apparatus 100 or the external device 200 based on the obtained error information. The setting information of the apparatus may include information for adjusting various types of setting values related to the operation of the apparatus. For example, the setting information may include, but is not limited to, an optimal communication protocol regarding a network between devices and a target set value associated with the software of the device.

The processor 130 may correct the setting value of at least one of the electronic apparatus 100 or the external device 200 based on the obtained setting information. Specifically, the processor 130 may obtain the setting information for correcting a setting value of the electronic apparatus 100 when an error has occurred in the electronic apparatus 100, and may correct a setting value of the electronic apparatus 100 based on the obtained setting information. When it is identified that an error occurs in the external device 200, the processor 130 may transmit a control signal to the external device 200 through the communication interface 110 to correct the setting value of the external device 200.

The processor 130 may identify whether a setting value correction of the electronic apparatus 100 is necessary based on the error type if it is identified that an error is generated in the electronic apparatus 100 based on the obtained error information. If it is identified that the setting value correction of the electronic apparatus 100 is necessary, the processor 130 may correct the setting value of the electronic apparatus 100 based on the obtained setting information. If it is identified that an error is generated in the external device 200, the processor 130 may identify whether a setting value correction of the external device 200 is required based on the type of error that has occurred. If it is identified that the setting value correction of the external device 200 is necessary, the processor 130 may transmit, to the external device 200 through the communication interface 110, a control signal to correct the setting value of the external device 200 based on the obtained setting information.

The electronic apparatus 100 may further include a display. Even if the electronic apparatus 100 corrects the setting value of the device in which the error has occurred, when removing error is not possible, the processor 130 may provide guide information for solving the error generated in at least one of the electronic apparatus 100 or the external device 200 based on the obtained error information through the display. For example, the processor 130 may provide guide information corresponding to the user action through the display when the user action is identified as needed to remove the error based on the obtained error information.

The processor 130 may identify whether a user action for the electronic apparatus 100 is required based on the type of error that occurred if it is identified that an error has occurred in the electronic apparatus 100 based on the obtained error information. If a particular user action for the electronic apparatus 100 is identified as needed, the processor 130 may provide guide information corresponding to the corresponding user action. If it is identified that an error has occurred in the external device 200, the processor 130 may identify whether a user action for the external device 200 is required based on the type of error that has occurred. If it is identified that a particular user action for the external device 200 is necessary, the processor 130 may provide guide information corresponding to the corresponding user action.

The processor 130 according to an example may provide guide information through the display, and the processor 130 according to another example may control the communication interface 110 to transmit a control signal related to the provision of the guide information to another electronic apparatus (not shown). Here, the other electronic apparatus may include a user terminal, such as a smart phone, but is not limited thereto.

The processor 130 may correct a setting value of the device in which an error has occurred based on the obtained setting information to remove the error, and may provide guide information for solving an error when it is identified that the error has not been removed after the set value is corrected. The processor 130 may obtain the status information of the electronic apparatus 100 and the external device 200 again after the set value correction, obtain guide information for removing the corresponding error when the error information corresponding to the at least one device is identified based on the obtained state information of the devices, and provide the obtained guide information to the user.

According to an example, the memory 120 may store an artificial intelligence model trained to output error information of the device based on the state information of the device. The processor 130 may input state information of the electronic apparatus 100 and state information of the external device 200 to an artificial intelligence model stored in the memory 120 to obtain error information of at least one of the electronic apparatus 100 or the external device 200, and obtain setting information corresponding to at least one device in which an error has occurred based on the obtained error information.

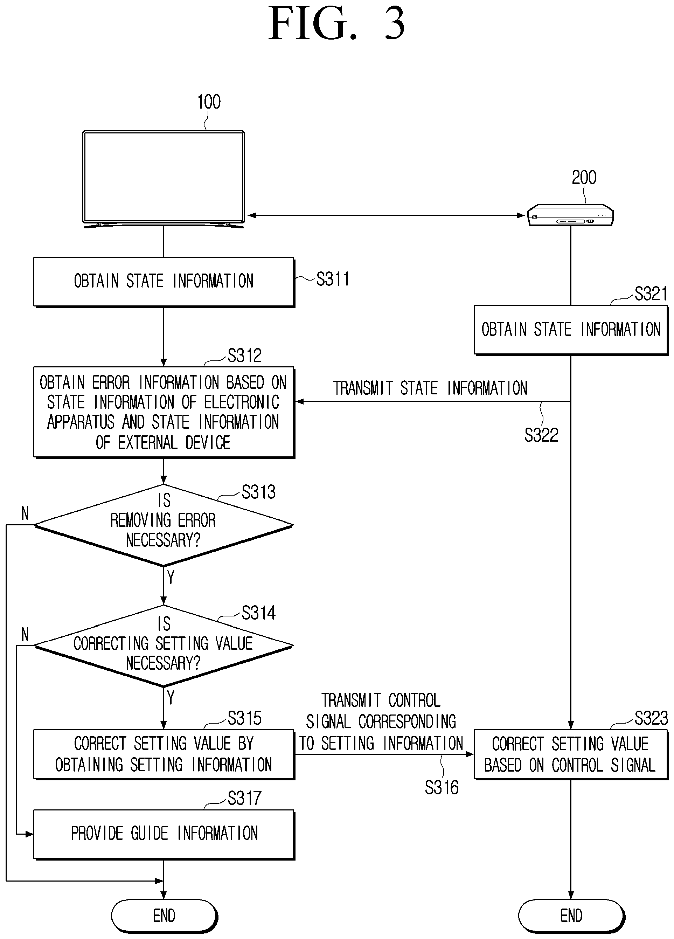

FIG. 3 is a flowchart illustrating an operation of an electronic apparatus and an external device according to an embodiment of the disclosure.

The electronic apparatus 100 according to an embodiment of the disclosure may be connected to an external device 200 to provide content to a user. Although FIG. 3 shows that the electronic apparatus 100 is connected to one external device 200, the electronic apparatus 100 may be connected to a plurality of external devices to provide content. For example, the electronic apparatus 100 may be connected to a set-top box and a sound bar to provide an image based on data related to content received from the set-top box, and directly transmit data related to the content to the sound bar to output an audio signal through the sound bar to provide the content.

The electronic apparatus 100 may obtain state information of the electronic apparatus 100 every preset period in operation S311. In the same manner, the externa device 200 may also obtain state information of the external device 200 every preset period in operation S321.

The external device 200 may transmit state information of the external device 200 to the electronic apparatus 100 in operation S322, and the electronic apparatus 100 may obtain error information regarding at least one of the two devices based on the state information of the electronic apparatus and the state information of the external device based on the self-diagnosis mode being executed in operation S312.

The electronic apparatus 100 may determine whether an error generated in at least one of the electronic apparatus 100 or the external device 200 needs to be removed based on the obtained error information in operation S313. The error information obtained by the electronic apparatus 100 may include information about at least one of a type of an error, an urgent level of an error, or an error occurrence time point, and the processor 130 may determine whether an error generated in at least one of the electronic apparatus 100 or the external device 200 is to be removed based on the obtained error information, or whether an executed self-diagnosis mode is terminated without error removal.

For example, the processor 130 may identify that an error related to the heating state of the electronic apparatus 100 has occurred based on the error information for the electronic apparatus 100, and may terminate the self-diagnosis mode based on identifying that the emergent level of the error related to the heating state is "low" (S313: N).

The processor 130 may identify that an error related to the data output state of the external device 200 has occurred on the basis of the error information for the external device 200, and determine that the error in the external device 200 needs to be removed based on identifying that the emergent level of the error related to the data output state is "high" (S313: Y).

If the processor 130 identifies that there is a need for error removal in operation S313:Y, the processor 130 may identify whether a set value correction for at least one of the electronic apparatus 100 or the external device 200 is required based on the obtained error information in operation S314. The processor 130 may identify whether a setting value correction is required to remove the generated error, or whether a user action for error removal is required.

When it is identified that the setting value correction related to at least one of the electronic apparatus 100 or the external device 200 is required in operation S314:Y, the processor 130 may obtain setting information for the device in which the error has occurred, and control the device in which an error is generated based on the obtained setting information. When the processor 130 identifies that an error has occurred in the electronic apparatus 100, the processor 130 may obtain setting information for the electronic apparatus 100 to correct the setting value of the electronic apparatus 100 in operation S315, obtain setting information for the external device 200 when an error has occurred in the external device 200, and transmit a control signal corresponding to the obtained setting information to the external device 200 through the communication interface 110 in operation S316.

The control signal may include correction data for adjusting the setting value of the external device, and the external device 200 may receive a control signal for correcting the setting value of the external device 200 from the electronic apparatus 100, and may correct the setting value of the external device 200 based on the received control signal in operation S323.

If it is identified that at least one user action is required to remove an error that has occurred to at least one of the electronic apparatus 100 or the external device 200 in operation S314:N, the processor 130 may provide guide information related to at least one user action in operation S317.

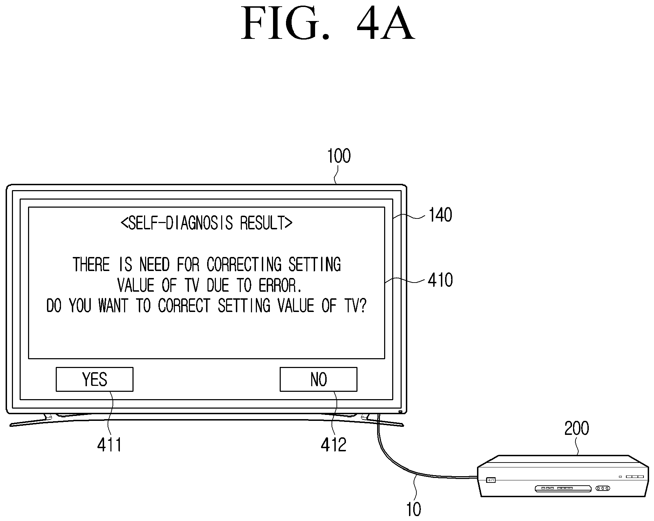

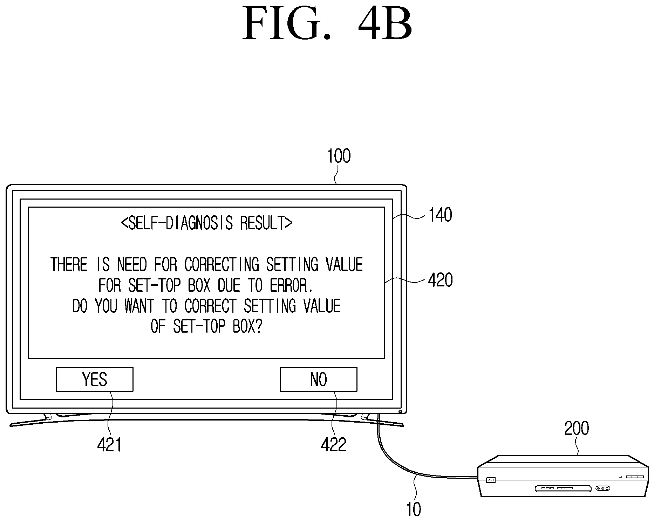

FIGS. 4A and 4B are diagrams illustrating an operation of removing an error occurring in an electronic apparatus according to an embodiment of the disclosure. Referring to FIGS. 4A and 4B, the electronic apparatus 100 may be implemented as a TV including the display 140.

Referring to FIG. 4A, when the self-diagnosis mode is executed by the electronic apparatus 100 connected to the external device 200 through the wired interface 10, the electronic apparatus 100 may identify that an error has occurred in the electronic apparatus 100 based on the state information of the electronic apparatus 100 and the state information of the external device 200. The electronic apparatus 100 may identify a need for correcting a setting value of the electronic apparatus 100 to remove the generated error, and obtain setting information corresponding to the electronic apparatus 100.

The electronic apparatus 100 according to an example may provide, to the display 140, a guide user interface (UI) 410 indicating that there is a need for correcting a setting value for the electronic apparatus 100 in which an error has occurred. According to an example, if the user desires to correct the setting value for the electronic apparatus 100, the user may select "Yes" button 411, and if not, may select "No" button 412, and the electronic apparatus 100 may identify whether to correct the setting value of the electronic apparatus 100 based on the selection of the user.

Referring to FIG. 4B, the electronic apparatus 100 connected to the external device 200 through the wired interface 10 may identify that an error has occurred in the external device 200 based on the state information of the electronic apparatus 100 and the state information of the external device 200 when the self-diagnosis mode is executed. The electronic apparatus 100 may identify a need for correcting a setting value of the external device 200 to remove the generated error, and obtain setting information corresponding to the external device 200.

The electronic apparatus 100 according to an example may provide, through the display 140, the guide UI 420 indicating that there is a need for correcting a setting value for the external device 200 in which an error has occurred. According to an example, if the user desires to correct the setting value for the external device 200, the user may select "Yes" button 421, and if not, may select "No" button 422, and the electronic apparatus 100 may identify whether to correct the setting value of the external device 200 based on the selection of the user.

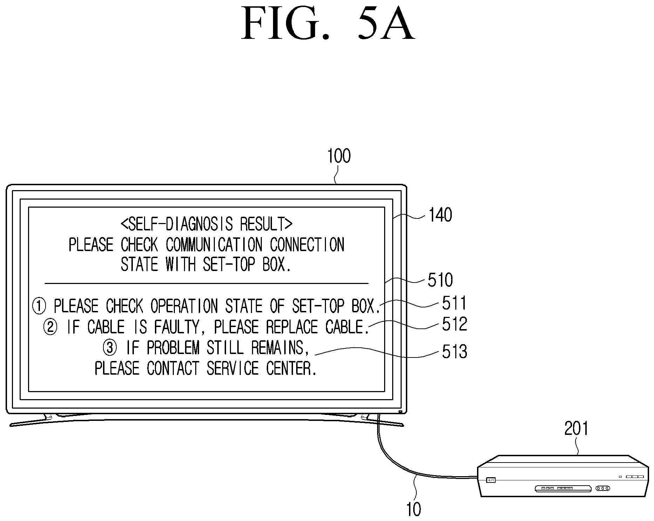

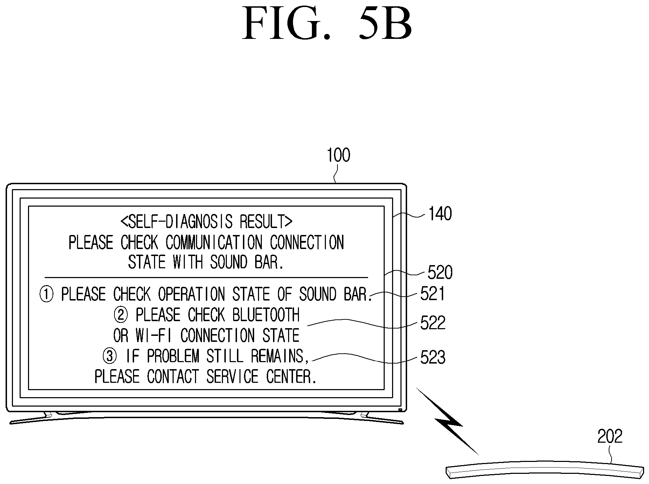

FIGS. 5A and 5B are diagrams illustrating an operation of removing an error occurring outside an electronic apparatus according to an embodiment of the disclosure. Referring to FIGS. 5A and 5B, the electronic apparatus 100 may be implemented with a TV including the display 140.

Referring to FIG. 5A, the external device may be implemented as a source device, e.g., a set-top box 201, which transmits data regarding content to the electronic apparatus 100. The electronic apparatus 100 connected to the external device 201 through the wired interface 10 may identify that an error has occurred in the external device 201 based on the state information of the electronic apparatus 100 and the state information of the external device 201 when the self-diagnosis mode is executed. The electronic apparatus 100 may identify that a user action for the external device 201 is required to remove the generated error.

The electronic apparatus 100 according to an example may provide a guide UI specification 510 indicating a user action with respect to the external device 201 in which an error has occurred through the display 140. According to an embodiment, the guide UI 510 may include, but is not limited to, information 511 about the measures for the external device 201, information 512 about the measures for the wired interface 10, and information 513 for the action requesting the service when the error is impossible with the above-mentioned measures.

Referring to FIG. 5B, the external device may be implemented as a sink device, for example, a sound bar 202, which receives data about content from the electronic apparatus 100 and outputs an audio signal. The electronic apparatus 100 connected to the external device 202 through the wireless interface may identify that an error has occurred in the external device 202 based on the state information of the electronic apparatus 100 and the state information of the external device 202 when the self-diagnosis mode is executed. The electronic apparatus 100 may identify that a user action for the external device 202 is needed to remove the generated error.

The electronic apparatus 100 according to an example may provide a guide UI 520 that indicates a user action to the external device 202 in which an error has occurred through the display 140. According to an example, the guide UI 520 may include, but is not limited to, the information 521 for the measures for the external device 202, the information 522 for the measures for the network connection state, and the information 523 for the action requesting the service when the error is impossible with the above-mentioned measures.

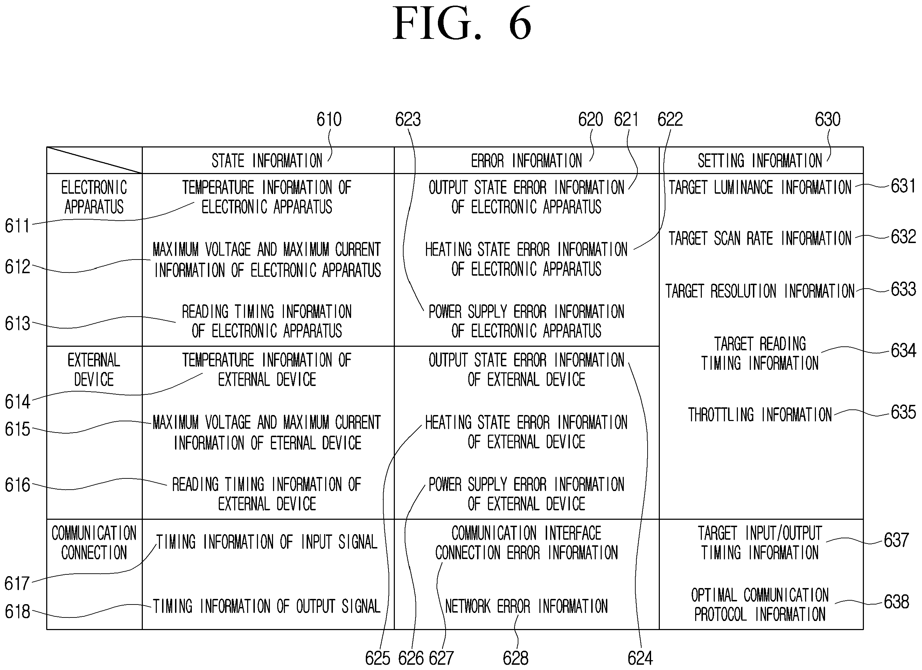

FIG. 6 is a diagram illustrating various information obtained for removing an error according to an embodiment of the disclosure. With reference to FIG. 6, various types of information utilized to remove errors generated in at least one of the electronic apparatus 100 or the external device 200 will be described in detail with reference to FIG. 6. In order to classify various information in detail, referring to FIG. 6, the information corresponding to the error generated by the electronic apparatus 100 and the external device 200 and information on the communication connection between the electronic apparatus 100 and the external device 200 will be distinguished from each other for description.

Referring to FIG. 6, state information 610 of the electronic apparatus 100 may include temperature information 611 of the electronic apparatus 100, maximum voltage and maximum current information 612 of the electronic apparatus 100, and reading timing information 613 of the electronic apparatus 100. The temperature information 611 of the electronic apparatus 100 may include information about a temperature corresponding to a portion of the electronic apparatus 100 adjacent to the processor 130. The maximum voltage and maximum current information 612 of the electronic apparatus 100 may include information about the maximum voltage and the maximum current supplied to each configuration or detailed configuration of the electronic apparatus 100. The reading timing information 613 of the electronic apparatus 100 may include information about a timing margin applied during a process of reading data stored in the memory 120.

The state information 610 of the external device 200 may include temperature information 614 of the external device 200, information 615 about the maximum voltage and maximum current of the external device 200 and the reading timing information 616 of the external device 200. The temperature information 614 of the external device 200 may include information about a temperature corresponding to a portion of the external device 200 adjacent to the processor of the external device 200. The maximum voltage and maximum current information 615 of the external device 200 may include information about the maximum voltage and the maximum current supplied to each configuration or detailed configuration of the external device 200. The reading timing information 616 of the external device 200 may include information about the timing margin to be applied when the processor of the external device 200 reads data stored in the memory of the external device 200.

The state information 610 related to the communication connection between the electronic apparatus 100 and the external device 200 may include timing information 617 of an input signal applied during a process of receiving data related to content from a source device, and timing information 618 of an output signal applied during a process of transmitting data related to the content from the source device to the sink device.

The error information 620 of the electronic apparatus 100 may include the output state error information 621 of the electronic apparatus 100, the heating state error information 622 of the electronic apparatus 100, and the power supply error information 623 of the electronic apparatus 100. The output state error information 621 of the electronic apparatus 100 may include information about an error generated when the electronic apparatus 100 operating as the source device transmits data about the content to the external device 200 operating as the sink device. The heating state error information 622 of the electronic apparatus 100 may include information about an error in which the configuration of the electronic apparatus 100 is damaged by the heat generated by the electronic apparatus 100. The power supply error information 623 of the electronic apparatus 100 may include information about an error in which a maximum voltage or a maximum current supplied to each configuration or detailed configuration of the electronic apparatus 100 exceeds a threshold value in a communication process of the electronic apparatus 100 and the external device 200.

The error information 620 of the external device 200 may include the output state error information 624 of the external device 200, the heating state error information 625 of the external device 200, and the power supply error information 626 of the external device 200. The output state error information 624 of the external device 200 may include information about the error generated in the process of transmitting data about the content to the electronic apparatus 100 operating as the sink device. The heating state error information 625 of the external device 200 may include information about an error in which the configuration of the external device 200 is damaged by the heat generated by the external device 200. The power supply error information 626 of the external device 200 may include information about an error in which the maximum voltage or the maximum current supplied to each configuration or detailed configuration of the external device 200 in the communication process of the electronic apparatus 100 and the external device 200 exceeds a threshold value.

The error information 620 related to the communication connection between the electronic apparatus 100 and the external device 200 may include network error information 627 of the communication interface indicating that connection between each device is not made normally based on the communication protocol corresponding to the wired interface or wireless interface connecting each device and network error information 628 generated as a timing margin of the input and output signal applied during the process of data transmission between devices is not secured sufficiently, even though communication connection is made normally.

The setting information 630 corresponding to at least one of the electronic apparatus 100 or the external device 200 may include target luminance information 631 related to the luminance of the electronic apparatus 100, target scan rate information 632 related to the scan rate of the electronic apparatus 100, target resolution information 633 related to the resolution of the electronic apparatus 100, target reading timing information 634 related to the data reading timing of the device in which the error has occurred, and throttling information 635. The throttling means controlling the power provided to the clock of the corresponding device or each configuration of the device as the temperature of the device increases, thereby lowering the performance of the apparatus and controlling the temperature of the apparatus to be lowered, but the embodiment is not limited thereto. Throttling information 635, according to one example, may include information related to at least one criterion associated with throttling operation.

The setting information 630 regarding the communication connection between the electronic apparatus 100 and the external device 200 may include the target input/output timing information 637 including information related to the timing margin of the input/output signal applied during the data transmission process between the devices, and the optimal communication protocol information 638 including the optimal communication protocol in connection with the communication interface connecting each device.

Based on the temperature information 611 of the electronic apparatus 100, the processor 130 according to an example may identify that the temperature of the electronic apparatus 100 is higher than the reference temperature based on the temperature information 611 of the electronic apparatus 100, and obtain the heating state error information 622 of the electronic apparatus 100. The processor 130 may obtain target luminance information 631, target scan rate information 632, and target resolution information 633 for adjusting the luminance, scanning rate, and resolution of the electronic apparatus 100 to control the temperature of the electronic apparatus 100 to be lowered, and may correct the setting value of the electronic apparatus 100 based on the obtained information.

The processor 130 may obtain the throttling information 635 to change the former throttling criterion to lower the performance of the electronic apparatus by 20% when the temperature of the electronic apparatus 100 rises above the reference temperature to a new criterion to lower the performance of the electronic apparatus by 30% when the temperature of the electronic apparatus 100 rises above the reference by 10, and may correct the setting value of the electronic apparatus 100 based on the obtained throttling information 635.

In consideration of the change in the semiconductor properties included in the configuration of the electronic apparatus 100 according to the heating state error of the electronic apparatus 100, the processor 130 may obtain target reading timing information 634 for adjusting the reading timing margin value applied during the process of reading the data stored in the memory 120, and correct the setting value of the electronic apparatus 100 based on the obtained information 634, thereby controlling the electronic apparatus 100 so as not to cause an interruption in providing content even in a situation where the temperature of the electronic apparatus 100 is higher than the reference temperature by a threshold temperature or more.

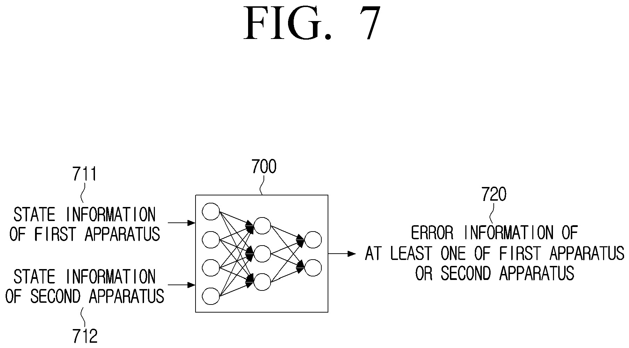

FIG. 7 is a diagram illustrating an artificial intelligence model according to an embodiment of the disclosure.

Referring to FIG. 7, the memory 120 may store an artificial intelligence model 700. The AI model 700 may include a plurality of neural network layers. Each of the plurality of neural network layers includes a plurality of weight values, and may perform a neural network processing operation through an iterative operation leveraging results of a previous layer and a plurality of weight values. The plurality of weight values included in the plurality of neural network layers may be optimized by training results of the AI model 700. For example, the plurality of weight values may be updated such that a loss value or a cost value obtained by the AI model 700 is reduced or minimized during the training process. For example, the plurality of weight values may be updated such that loss values or cost values obtained in the AI model during the training process are reduced or minimized. The artificial neural network may include a deep neural network (DNN) and may include, for example, but is not limited to, a convolutional neural network (CNN), a recurrent neural network (RNN), a restricted Boltzmann machine (RBM), a deep belief network (DBN), bidirectional recurrent deep neural network (BRDNN), a deep Q-network, or the like.

The processor 130 according to an example may be an artificial intelligenceonly processor, such as a neural network processing unit (NPU). In this example, the processor 130 controls the processor 130 to process the input data according to a predefined operation rule or an artificial intelligence model stored in the memory 120. If the processor 130 is an artificial intelligence dedicated processor, the artificial intelligence dedicated processor may be designed in a hardware structure specialized for processing a particular artificial intelligence model.

The artificial intelligence model 700 according to an example may be a model trained to output error information of the device based on the state information of the device. Specifically, the artificial intelligence model 700 may be a model trained to output at least one error information 720 of the first apparatus or the second apparatus based on the state information 711 of the first apparatus and the state information 712 of the second apparatus. According to another example, the artificial intelligence model 700 may be a model trained to output error information regarding the communication connection between the first apparatus and the second apparatus and at least one error information 720 of the first apparatus or the second apparatus based on the state information 711 of the first apparatus and the state information 712 of the second apparatus.

The processor 130 may input state information about the electronic apparatus 100 and state information about the external device 200 to the artificial intelligence model 700 to obtain at least one error information of the electronic apparatus 100 or the external device 200. Furthermore, the processor 130 may input state information about the electronic apparatus 100 and state information about the external device 200 to the artificial intelligence model 700 to additionally obtain error information related to the communication connection between the electronic apparatus 100 and the external device 200.

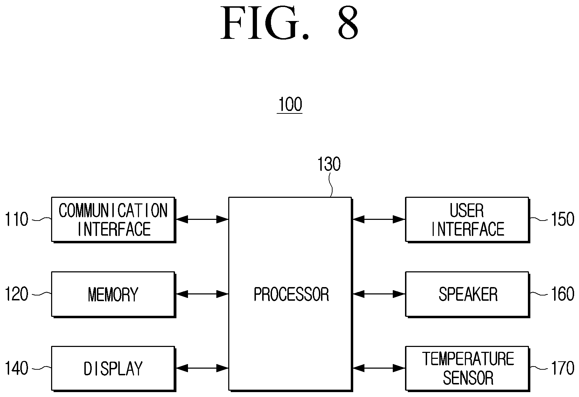

FIG. 8 is a block diagram illustrating a functional configuration of an electronic apparatus according to an embodiment of the disclosure.

Referring to FIG. 8, the electronic apparatus 100 may include a communication interface 110, a memory 120, a processor 130, a display 140, a user interface 150, a speaker 160, and a temperature sensor 170. The configuration of the configuration shown in FIG. 8 which overlaps with FIG. 2 will not be described in detail.

The display 140 is configured to provide a user with an image related to content by the electronic apparatus 100. The display 140 may be implemented as a display of various types such as, for example, and without limitation, a liquid crystal display (LCD), an organic light emitting diodes (OLED) display, a quantum dot light-emitting diodes (QLED) display, a plasma display panel (PDP), or the like. The display 140 may be implemented with a flexible display, a third-dimensional (3D) display, or the like.

The user interface 150 is configured to be involved in performing interaction with the user by the electronic apparatus 100. For example, the user interface 150 may include at least one of a touch sensor, a motion sensor, a button, a jog dial, a switch, a microphone, or a speaker, but is not limited thereto.

The user interface 150 according to an example may receive a user command regarding content provision from a user, and the processor 130 may provide content based on a user command received through the user interface 150. The user interface 150 may be a user command related to correcting a set value for error removal generated in at least one of the electronic apparatus 100 or the external device 200, and the processor 130 may correct a setting value of the device in which an error has occurred based on the received user command.

The speaker 160 is a device to convert an electrical sound signal generated from the processor 130 corresponding to an audio provided by the electronic apparatus 100 into a sound wave. The speaker 160 may include a permanent magnet, a coil, and a vibration plate, and may output sound by vibrating the vibration plate by electromagnetic interaction between the permanent magnet and the coil.

The processor 130 may control the speaker 160 to output a guide voice related to the individual operation when performing a series of operations for removing an error generated in at least one of the electronic apparatus 100 or the external device 200.

The temperature sensor 170 may measure a temperature of a portion of the electronic apparatus 100 adjacent to the processor 130. According to an example, the processor 130 may obtain the heating state error information of the electronic apparatus 100 based on the temperature information of the electronic apparatus 100 obtained through the temperature sensor 170.

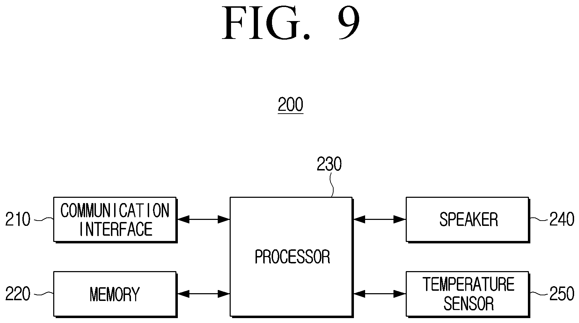

FIG. 9 is a block diagram illustrating a configuration of an external device according to an embodiment of the disclosure.

Referring to FIG. 9, the external device 200 may include a communication interface 210, a memory 220, a processor 230, a speaker 240, and a temperature sensor 250.

The communication interface 210 may input and output various types of data. For example, the communication interface 210 may receive and transmit various types of data with the electronic apparatus 100 through communication methods such as an access point (AP)-based wireless fidelity (Wi-Fi) (wireless local area network (WLAN)), Bluetooth, Zigbee, wired/wireless local area network (LAN), wide area network (WAN), Ethernet, IEEE 1394, high definition multimedia interface (HDMI), universal serial bus (USB), mobile high-definition link (MHL), advanced encryption standard (AES)/European broadcasting union (EBU), optical, coaxial, or the like.

The memory 220 may store data required for various embodiments of the disclosure. The memory 220 may be implemented as a memory embedded within the external device 200 or a memory detachable from the external device 200 according to the usage of data storage. For example, the data for driving the external device 200 may be stored in the memory embedded within the external device 200, and the data for upscaling of the external device 200 may be stored in the memory detachable from the external device 200. A memory embedded in the external device 200 may be implemented as at least one of a volatile memory such as a dynamic random access memory (DRAM), a static random access memory (SRAM), a synchronous dynamic random access memory (SDRAM), or a non-volatile memory (e.g., one time programmable ROM (OTPROM), programmable ROM (PROM), erasable and programmable ROM (EPROM), EEPROM, mask ROM, flash ROM, a flash memory (e.g., NAND flash or NOR flash), a hard disk drive (HDD), a solid state drive (SSD), or the like. A memory detachably mounted to the external device 200 may be implemented as a memory card (e.g., a compact flash (CF), a secure digital (SD), micro secure digital (micro-SD), a mini secure digital (mini-SD), an extreme digital (xD), a multi-media card (MMC), etc.), an external memory (e.g., a universal serial bus (USB) memory, or the like) connectable to the USB port, or the like.

The processor 230 controls the overall operation of the external device 200. The processor 230 may be connected to each configuration of the external device 200 to control the operation of the external device 200 in general. For example, the processor 230 may be connected to a communication interface 210, a memory 220, a speaker 240, and a temperature sensor 250 to control the operation of the external device 200.

According to an embodiment, the processor 230 may be referred to as various names such as a digital signal processor (DSP), a microprocessor, a central processing unit (CPU), a micro controller unit (MCU), a micro processing unit (MPU), a neural processing unit (NPU), a controller, and an application processor (AP), but will be referred to as the processor 230 herein.

The processor 230 may be implemented as a system on chip (SoC) type or a large scale integration (LSI) type having a processing algorithm built therein, an application specific integrated circuit (ASIC) type, or in a field programmable gate array (FPGA) type. The processor 230 may include volatile memory such as SRAM.

The speaker 240 is a device to convert an electrical sound signal generated from the processor 230 corresponding to an audio provided by the external device 200 into a sound wave. The speaker 240 may include a permanent magnet, a coil, and a vibration plate, and may output sound by vibrating the vibration plate by electromagnetic interaction between the permanent magnet and the coil.

The processor 230 may control the speaker 240 to output a guidance speech associated with a series of operations for error removal performed by the electronic apparatus 100.

The temperature sensor 250 may measure a temperature of a portion of the external device 200 adjacent to the processor 230. According to an example, the processor 230 may obtain state information of the external device 200 including the temperature information of the external device 200 obtained through the temperature sensor 250 and control the communication interface 210 to transmit the obtained state information to the electronic apparatus 100.

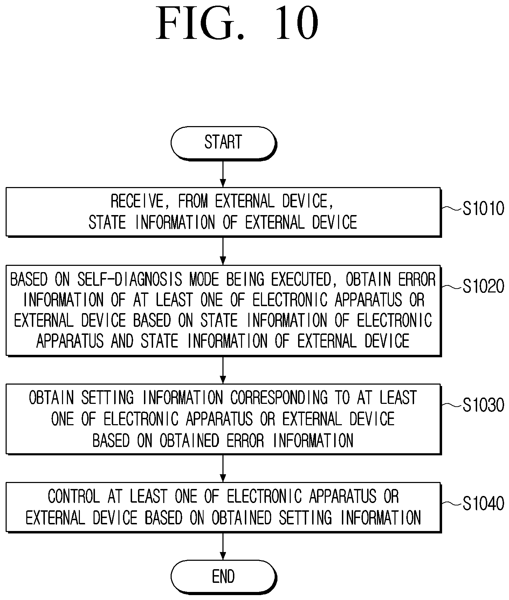

FIG. 10 is a flowchart illustrating a method of controlling according to an embodiment of the disclosure.

The method according to an embodiment may include receiving, from an external device, state information of the external device in operation S1010.

Based on a self-diagnosis mode being executed, the method may include obtaining error information of at least one of the electronic apparatus or the external device based on the state information of the electronic apparatus and the state information of the external device in operation S1020.

The method may include obtaining setting information corresponding to at least one of the electronic apparatus or the external device based on the obtained error information in operation S1030.

The method may include controlling at least one of the electronic apparatus or the external device based on the obtained setting information in operation S1040.

The method may further include providing guide information to solve an error occurring in at least one of the electronic apparatus or the external device based on the obtained error information.

The obtaining the setting information in operation S 1030 may include, based on identifying that an error occurs in the electronic apparatus based on the obtained error information, identifying whether correction of a setting value of the electronic apparatus is necessary based on the error information, and based on identifying that correction of a setting value of the electronic apparatus is necessary, and the correcting in operation S1040 may include correcting a setting value of the electronic apparatus based on the setting information.

The obtaining the setting information in operation S 1030 may include, based on identifying that an error occurs in the electronic apparatus based on the obtained error information, identifying whether a user action is necessary for the electronic apparatus based on the error information, and the controlling in operation S1040 may include, based on identifying that a user action for the electronic apparatus is necessary, providing guide information corresponding to the user action.

The obtaining the setting information in operation S 1030 may include, based on identifying that an error occurs in the external device based on the obtained error information, identify whether correction of a setting value of the external device is necessary based on the error information, and the controlling in operation S1040 may include, based on identifying that correction of a setting value of the external device is necessary, transmitting a control signal to correct a setting value of the external device to the external device through the communication interface based on the setting information.

The obtaining the setting information in operation S 1030 may include, based on identifying that an error occurs in the external device based on the obtained error information, identifying whether a user action for the external device is necessary based on the error information, and the controlling in operation S1040 may include, based on identifying that a user action for the external device is necessary, providing guide information corresponding to the user action.

The controlling in operation S1040 may include correcting a setting value of at least one of the electronic apparatus or the external device based on the obtained setting information, and based on identifying that an error is not removed after correcting the setting value, providing guide information to solve the error.

The error information may include at least one of communication connection error information, operation error information of the electronic apparatus, or operation error information of the external device, the communication connection error information may include at least one of connection error information of the communication interface or network error information, the operation error information of the electronic apparatus may include at least one of the output state effort information, heat dissipation state error information, or power supply error information of the electronic apparatus, and the operation error information of the external device may include at least one of the output state error information, heat dissipation state error information, or power supply error information of the external device.

The state information of the electronic apparatus may include at least one of the temperature information, maximum voltage or maximum current information, or timing information of the input signal of the electronic apparatus, and the state information of the electronic apparatus may include at least one of the temperature information, maximum voltage or maximum current information, or timing information of the output signal of the external device.

The obtaining error information in operation S1040 may include obtaining the error information by inputting state information of the electronic apparatus and state information of the external device to an artificial intelligence model, and the artificial intelligence model may be a model trained to output error information of the apparatus based on the state information of the apparatus.

The methods according to the various embodiments of the disclosure may be implemented as a type of an application installable in an existing electronic apparatus.

In addition, the methods according to various embodiments may be implemented only with software upgrade or hardware upgrade for the conventional electronic apparatus.

The various embodiments may be performed through an embedded server provided in the electronic apparatus or at least one external server.

The various embodiments described above may be implemented in a recordable medium which is readable by a computer or a device similar to the computer using software, hardware, or the combination of software and hardware. In some cases, embodiments described herein may be implemented by the processor 130 itself. According to a software implementation, embodiments such as the procedures and functions described herein may be implemented with separate software modules. Each of the software modules may perform one or more of the functions and operations described herein.

According to various embodiments described above, computer instructions for performing processing operations of a device according to the various embodiments described above may be stored in a non-transitory computer-readable medium. The computer instructions stored in the non-transitory computer-readable medium may cause a particular device to perform processing operations on the electronic apparatus 100 according to the various embodiments described above when executed by the processor of the particular device.

The non-transitory computer-readable medium is not a medium storing data for a short period of time such as a register, a cache, or a memory, but may refer to a medium that semi-permanently stores data and is readable by a machine. Specific examples of the non-transitory computer-readable medium may include a CD, a DVD, a hard disk drive, a Blu-ray disc, a USB, a memory card, and a ROM.

While embodiments of the disclosure have been shown and described, the disclosure is not limited to the aforementioned specific embodiments, and it is apparent that various modifications can be made by those having ordinary skill in the technical field to which the disclosure belongs, without departing from the scope of the disclosure as claimed by the appended claims. Also, it is intended that such modifications are not to be interpreted independently from the technical idea or prospect of the disclosure.

## Claims

1. An electronic apparatus comprising:
a communication interface;
a memory storing at least one instruction; and
a processor configured to execute the at least one instruction to:
receive, from an external device through the communication interface, state information of the external device,
execute a self-diagnosis mode to obtain error information of at least one of the electronic apparatus or the external device based on state information of the electronic apparatus and the state information of the external device,
obtain setting information corresponding to at least one of the electronic apparatus or the external device based on the obtained error information, and
control at least one of the electronic apparatus or the external device based on the obtained setting information.

2. The electronic apparatus of claim 1, further comprising:
a display,
wherein the processor is further configured to execute the at least one instruction to control the display to display guide information to solve an error occurring in at least one of the electronic apparatus or the external device based on the obtained error information.

3. The electronic apparatus of claim 1, wherein the processor is further configured to execute the at least one instruction to:
based on identifying that an error has occurred in the electronic apparatus based on the obtained error information, identify whether correction of a setting value of the electronic apparatus is necessary based on the error information, and
based on identifying that correction of a setting value of the electronic apparatus is necessary, correct a setting value of the electronic apparatus based on the setting information.

4. The electronic apparatus of claim 1, wherein the processor is further configured to execute the at least one instruction to:
based on identifying that an error has occurred in the electronic apparatus based on the obtained error information, identify whether a user action is necessary for the electronic apparatus based on the error information, and
based on identifying that the user action for the electronic apparatus is necessary, provide guide information corresponding to the user action.

5. The electronic apparatus of claim 1, wherein the processor is further configured to execute the at least one instruction to:
based on identifying that an error has occurred in the external device based on the obtained error information, identify whether correction of a setting value of the external device is necessary based on the error information, and
based on identifying that correction of a setting value of the external device is necessary, transmit a control signal to correct a setting value of the external device to the external device through the communication interface based on the setting information.

6. The electronic apparatus of claim 1, wherein the processor is further configured to execute the at least one instruction to:
based on identifying that an error has occurred in the external device based on the obtained error information, identify whether a user action for the external device is necessary based on the error information, and
based on identifying that the user action for the external device is necessary, provide guide information corresponding to the user action.

7. The electronic apparatus of claim 1, wherein the processor is further configured to execute the at least one instruction to:
correct a setting value of at least one of the electronic apparatus or the external device based on the obtained setting information, and
based on identifying that an error is not removed after correcting the setting value, provide guide information to solve the error.

8. The electronic apparatus of claim 1, wherein the error information comprises at least one of communication connection error information, operation error information of the electronic apparatus, or operation error information of the external device,
wherein the communication connection error information comprises at least one of connection error information of the communication interface or network error information,
wherein the operation error information of the electronic apparatus comprises at least one of state error information, heat dissipation state error information, or power supply error information of the electronic apparatus, and
wherein the operation error information of the external device comprises at least one of state error information, heat dissipation state error information, or power supply error information of the external device.

9. The electronic apparatus of claim 1, wherein the state information of the electronic apparatus comprises at least one of temperature information, maximum voltage or maximum current information, or timing information of an input signal of the electronic apparatus,
wherein the state information of the external device comprises at least one of temperature information, maximum voltage or maximum current information, or timing information of an output signal of the external device.

10. The electronic apparatus of claim 1, wherein the processor is further configured to execute the at least one instruction to obtain the error information by inputting state information of the electronic apparatus and state information of the external device to an artificial intelligence model, and
wherein the artificial intelligence model is a model trained to output error information of the electronic apparatus based on the state information of the electronic apparatus.

11. A method of controlling an electronic apparatus, the method comprising:
receiving, from an external device, state information of the external device;
executing a self-diagnosis mode to obtain error information of at least one of the electronic apparatus and the external device based on state information of the electronic apparatus and the state information of the external device;
obtaining setting information corresponding to at least one of the electronic apparatus or the external device based on the obtained error information; and
controlling at least one of the electronic apparatus or the external device based on the obtained setting information.

12. The method of claim 11, further comprising:
displaying guide information to solve an error occurring in at least one of the electronic apparatus or the external device based on the obtained error information.

13. The method of claim 11, wherein the obtaining the setting information comprises, based on identifying that an error has occurred in the electronic apparatus based on the obtained error information, identifying whether correction of a setting value of the electronic apparatus is necessary based on the error information, and
wherein the controlling comprises, based on identifying that correction of a setting value of the electronic apparatus is necessary, correcting a setting value of the electronic apparatus based on the setting information.

14. The method of claim 11, wherein the obtaining the setting information comprises, based on identifying that an error has occurred in the electronic apparatus based on the obtained error information, identifying whether a user action is necessary for the electronic apparatus based on the error information, and
wherein the controlling comprises, based on identifying that the user action for the electronic apparatus is necessary, providing guide information corresponding to the user action.

15. The method of claim 11, wherein the obtaining the setting information comprises, based on identifying that an error has occurred in the external device based on the obtained error information, identifying whether correction of a setting value of the external device is necessary based on the error information, and
wherein the controlling comprises, based on identifying that correction of a setting value of the external device is necessary, transmitting a control signal to correct a setting value of the external device to the external device based on the setting information.
